# NEW EUROPEAN PATENT SPECIFICATION

(11) **EP 2 878 231 B2**
(45) Date of publication and mention of the opposition decision: **19.06.2019**
(45) Mention of the grant of the patent: 14.09.2016
(21) Application number: 14004213.6
(22) Date of filing: 03.10.2007
(51) Int. Cl.: A47C 31/12, B60N 2/34, A47C 17/80, A47C 27/04, B60P 3/39

(54) **Vehicle bed-couch**
Fahrzeug-Bett-Couch
Lit-couchette de véhicule

(43) Date of publication of application: 03.06.2015
(62) Divisional of application: 07835080.8
(73) Proprietor: Volvo Lastvagnar AB, 405 08 Göteborg (SE)
(72) Inventor: Torgilsman, Ulf, 443 41 Gråbo (SE); Thuresson, Niklas, 442 97 Kode (SE)
(74) Representative: Volvo Technology Corporation

(56) References cited:
- WO-A1-94/22349
- WO-A1-2005/055771
- WO-A1-2008/085120
- CH-A- 156 706

## Description

### Field of the invention

The present invention relates to vehicle beds or couches, for example to vehicle-cab beds or couches. Moreover, the present invention also relates to methods of adjusting aforesaid vehicle beds or couches for achieving continuously-variable degrees of bed or couch stiffness and hence continuously adjustable degrees of comfort.

### Background of the invention

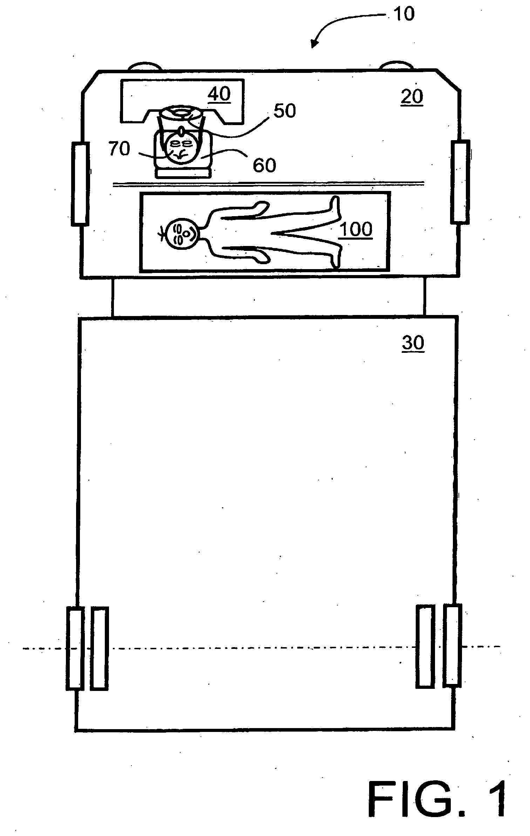

Beds and couches in cabs of heavy commercial vehicles are well known. In Figure 1, such an example vehicle is indicated generally by **10.** The vehicle **10** includes a cab **20** coupled to a trailer **30.** The cab **20** includes a steering console **40** including a steering wheel **50** and driver's seat **60.** In operation, a driver **70** is seated at the console **40** and adjusts controls of the console **40** and the steering wheel **50** for controlling and guiding a trajectory of the vehicle **10.** In a rear portion of the cab **20,** there is included a bed or couch **100** behind the console **40;** optionally, a safety barrier **110,** for example a safety net, is included between the bed or couch **100** and the console **40** to provide protection to a person sleeping or resting on the bed or couch **100** in an event of vehicular impact, namely a crash event.

Heavy commercial vehicles are costly investments. Competition amongst contemporary haulage companies requires their heavy commercial vehicles to be utilized to a fullest extent possible. It is therefore conventional practice for drivers of heavy commercial vehicles to sleep and rest in cabs of such vehicles when not driving the vehicles. Moreover, it is contemporary practice for heavy goods vehicles to have first and second drivers, wherein the first driver sleeps or rests on the bed or couch **100** of the cab **20** whilst the second driver drives the vehicle **10,** and vice versa, so that the vehicle **10** is susceptible to being kept in nearly constant use.

With regard to quality of life for the aforesaid first and second drivers when working with the vehicle **10,** a quality of comfort provided by the bed or couch **100** is very important. For example, as elucidated in a published Swedish patent no. SE 518 584 C2, it is important that a bed for incorporation into a vehicle cab has a requisite width for providing a comfortable rest or sleep. In the published Swedish patent no. SE 518 584 C2, there is described a bed arrangement with a variable bed surface. The bed arrangement comprises a first bed element with a first bed surface, and at least one supplementing peripheral second bed element with a second bed surface. Moreover, the bed arrangement also includes connecting devices which allow positioning of the second bed relative to the first bed element so that the bed arrangement is provided with a bed surface which comprises the first bed surface and the second peripheral bed surface. The second peripheral bed surface comprises a material body made of an elastic material, wherein the material body is compressible for adjusting a size of the second bed surface. The first bed surface has a size which is considerably greater than the second bed surface; the first bed surface is thereby operable to function as a primary supporting surface for a driver resting on the bed arrangement and is operable to exhibit a constant non-adjustable support stiffness in use.

A problem arising in practice is that drivers have different body weights and also different needs for support when resting or sleeping. Such support can depend, for example, on therapeutic need of the driver on account of driving activities potentially giving rise to repetitive strain injury or limb stiffness. There therefore arises a need for providing the bed arrangement with more possibilities for adjustment.

Air beds are known which can be inflated and thereby adjusted to user preference. However, such air beds have not found widespread use for vehicle cabs where a greater degree of comfort than can be provided by inflatable air beds is desired.

Beds are also known from CH 156706.

### Summary of the invention

An object of the present invention is to provide a bed or couch which is more versatile in its possibilities of comfort adjustment, for example for use in vehicle cabs for providing a greater degree of comfort during driver sleeping or resting.

The object of the invention is capable of being addressed by a bed-couch as defined in appended claim 1. According to a first aspect of the invention, there is provided a bed-couch according to claim 1.

Optionally, the bed-couch further includes a fastening arrangement for maintaining the bed-couch in a defined state of extension so as to maintain the defined corresponding flexible support characteristic when the bed-couch is in use with the person resting or sleeping thereupon. Such a fastening arrangement is of benefit in that it prevents the bed-couch springing back by elastic forces back to its retracted non-deployed state.

More optionally, in the bed-couch, the load-spreading arrangement is adjustable in area in response to the bed-couch being adjusted in at least one of its width and its length. Such performance of the load-spreading arrangement is of benefit in that the bed-couch is susceptible to providing a high degree of continuously-variable support adjustment over its entire supporting surface area irrespective of its degree of extension.

More optionally, in the bed-couch, the load-spreading arrangement includes interleaved and/or foldable component parts for providing for the adjustment of area of the load-spreading arrangement.

Optionally, in the bed-couch, the spring elements are arranged in rows and columns which are substantially parallel or orthogonal to transverse and longitudinal axes (x, z) of the bed-couch. Alternatively, in the bed-couch, the spring elements are arranged in rows and columns which are substantially diagonal to transverse and longitudinal axes (x, z) of the bed-couch (105).

Optionally, in the bed-couch, the spring elements are implemented as one or more of:
(a) one or more coiled helical springs implemented using a spiral of metal spring wire;
(b) one or more coiled helical springs implemented using one or more spirals of molded plastics material;
(b) an expanded porous elastic plastics material foam;
(c) a porous natural polymer elastic material;
(d) one or more inflated cavities bounded by flexible substantially gas-tight walls; and

Optionally, in the bed-couch, the coupling arrangement is implemented as one or more of:
(a) one or more bands, strips or webs of elastic material;
(b) a molded elastic chain of components fabricated from polymer plastics material;
(c) a chain of flexible spring metal hoops operable to exhibit longitudinal elastic behaviour; and
(d) an inflatable and deflatable air envelope operable when inflated to separate its respective neighbouring spring elements, and operable when deflated to enable the neighbouring spring elements to substantially mutually abut.

Optionally, the bed-couch is adapted for use in one or more applications as follows:
(a) for cabs of heavy commercial vehicles;
(b) for aquatic vessels including one or more of: yachts, ferries, cruise ships, cargo ships, submarines;
(c) in air-borne vehicles includes one of more of: aircraft, space stations;
(d) in road vehicles and trailers including one or more of: a caravans, coaches, buses, automobiles;
(e) in hospitals for improving patient comfort where a wide range of patient weights and preferences need to be accommodated;
(f) in domestic premises;
(g) in massage parlours for massage beds; and
(h) in infant cots in nurseries.

The bed-couch pursuant to the present invention is even susceptible to being adapted to function as comfort-adjustable reclining couches for dentists' surgeries, tattoo parlours and surgical operating theatres for ensuring patient or customer enhanced comfort and freedom from pain.

According to a second aspect of the invention, there is provided a vehicle comprising one of more bed-couches pursuant to the first aspect of the invention.

According to a third aspect of the invention, there is provided a method of adjusting a stiffness of support provided in operation by a bed-couch including an upper supporting surface for receiving a person, the bed-couch being operable to provide a flexible support characteristic at the upper surface for supporting the person, characterized in that the method includes steps of:
(a) providing in the bed-couch an array of spatially distributed spring elements for providing the flexible support characteristic; and
(b) adjusting mutual spatial separations between neighbouring spring elements of the array of distributed spring elements for affecting in operation a continuously-variable adjustment of the flexible support characteristic.

It will be appreciated that features of the invention are susceptible to being combined in any combination without departing from the scope of the invention as defined by the appended claims.

### Description of the diagrams

Embodiments of the present invention will now be described, by way of example only, with reference to the following diagrams wherein:
- Figure 1: is an illustration of a contemporary vehicle whose cab includes a bed or couch for driver sleeping or resting;
- Figure 2: is an illustration of an embodiment of a bed-couch pursuant to the present invention;

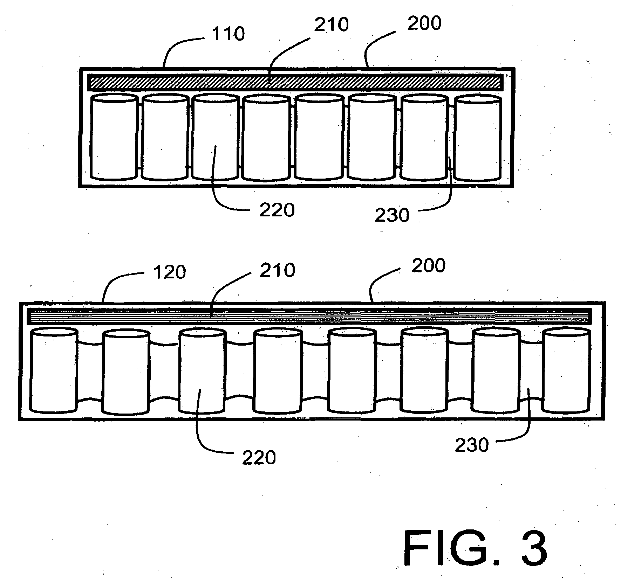

- Figure 3: is a cross-sectional illustration of the bed-couch of Figure 2;
- Figure 4: comprises illustrations regarding implementation of an optional load spreading layer included within the bed-couch of Figure 2;
- Figure 5: is a perspective schematic view of the bed-couch of Figure 2 in two conditions of extension providing variable support stiffness;
- Figures 6a and 6b: are plan schematic views of the bed-couch of Figure 2, illustrating two alternative spring configurations;
- Figure 7: is a schematic illustration of the bed-couch of Figure 2 in situ in a vehicle cab, the bed-couch being in a retracted compact state; and
- Figure 8: is a schematic illustration of the bed-couch of Figure 2 in situ in a vehicle cab, the bed-couch being in a deployed state.

### Description of embodiments of the invention

In overview, the present invention is concerned with a modified implementation of the aforesaid bed or couch **100** for achieving adjustable spring stiffness per unit area of its upper load-bearing surface so that the driver **70** of the vehicle **10** is able to adjust the modified implementation of the bed or couch **100** for optimal comfort. Such optimal comfort is potentially dynamically variable depending upon a body weight of the driver **70,** and a physical state of the driver **70** such as a level of driver **70** fatigue and driver **70** strain injury. The modified implementation of the aforesaid bed or couch **100** pursuant to the present invention is concerned with providing an array of spring elements whose mutual spatial separation is susceptible to being driver-adjusted so as to affect an adjustment of effective spring stiffness per unit area of the modified implementation of the aforesaid bed or couch **100.** Implementations of the invention are concerned with ensuring that array of spring elements incorporated into the modified implementation of the aforesaid bed or couch **100** spread themselves out in a desirably uniform manner during comfort adjustment of the modified bed or couch **100.**

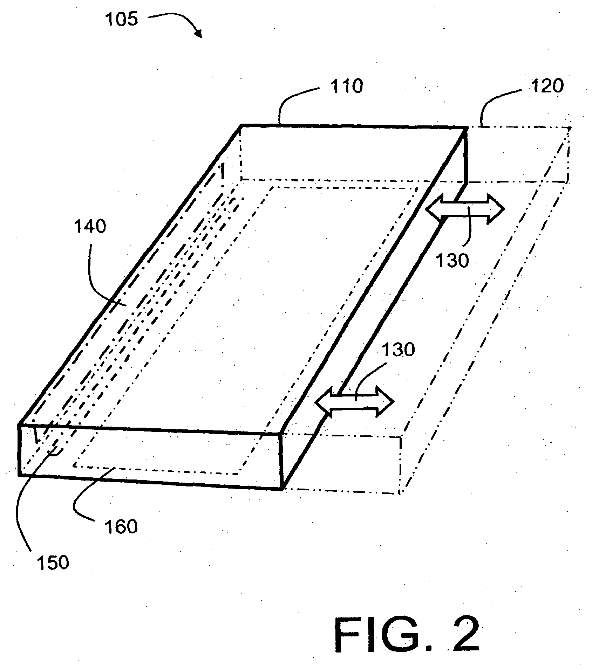

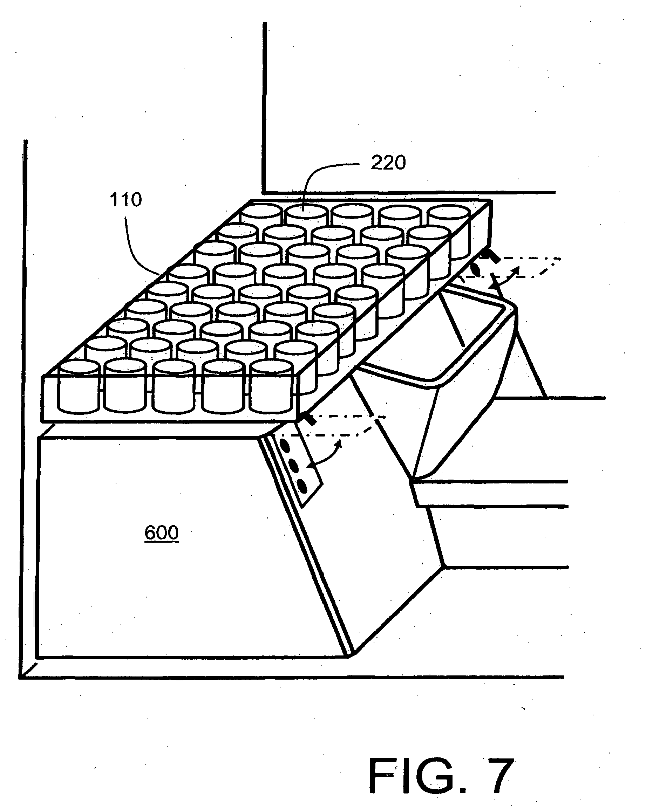

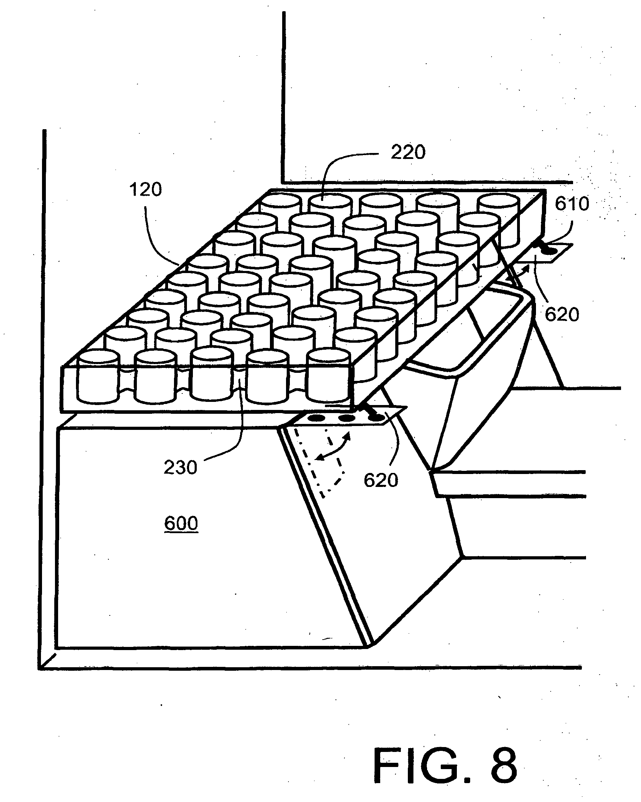

Referring to Figure 2, an embodiment of a bed or couch pursuant to the present invention is indicated generally by **105.;** the bed or couch **105** will hereinafter be referred to as "bed-couch **105".** The bed-couch **105** is driver-adjustable in size between a retracted compact non-deployed state denoted by **110** and an expanded deployed state denoted by **120.** The bed-couch **105** is relatively stiffer per unit area thereof on its upper surface when in the retracted state **110,** and is relatively softer per unit area thereof on its upper surface when in the expanded state **120.** The bed-couch **105** is continuously adjustable in stiffness per unit area between the retracted state **110** and the expanded state **120** by adjusting a transverse width of the bed-couch **105** as denoted by arrows **130.** For example, the bed-couch **105** is 2 metres long, 0.8 metres wide and 25 cm thick in the retracted state **110,** and the bed-couch **105** is 2 metres long, 1,2 metres wide and 25 cm thick in the expanded state **120.** Optionally, the bed-couch **105** is implemented so that its underside is slidably supportable on a supporting surface **160,** for example a bench structure of the cab **20** of the vehicle **10** as illustrated in Figures 7 and 8. The bed-couch **105** is implemented to be firmly couplable to an attachment surface of the cab **20** at one or more of:
(a) a side surface **140** of the bed-couch **105;** and
(b) an underside edge surface **150** of the bed-couch **105.**

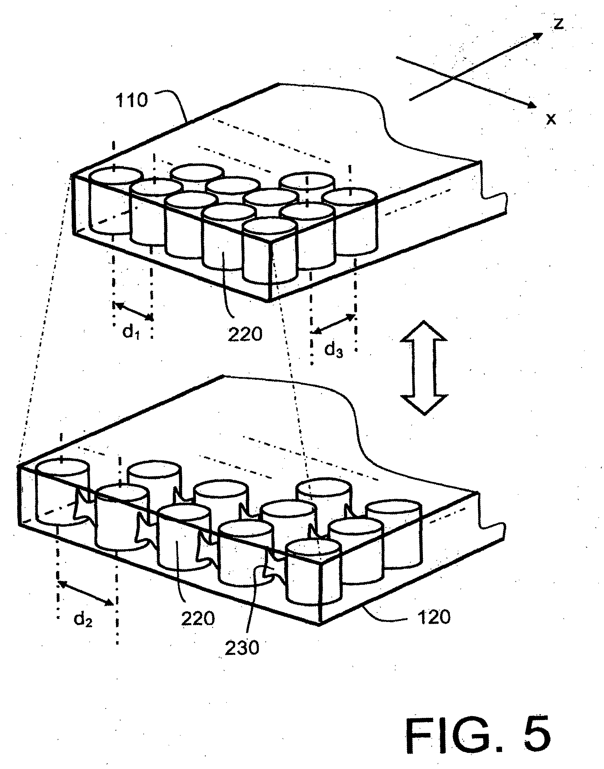

The bed-couch **105** will now be described in greater detail with reference to Figure 5. In Figure 5, a schematic illustration of a cross-section through the bed-couch **105** is shown. The bed-couch **105** comprises a spatially distributed array of spring elements **220** mutually coupled together by flexible coupling elements **230.** Optionally, the spring elements **220** are mutually similar. Alternatively, the spring elements **220** can be mutually different; for example, those spring elements **220** which are near a periphery of the bed-couch **105** are optionally stiffer than those spring elements **220** near a central region of the bed-couch **105** so that the bed-couch **105** naturally forms a retaining depression at its centre for preventing the driver **70** from vibrating out of the bed-couch **105** when the vehicle **10** is being driven by another driver and the driver **70** is resting or sleeping.

The spring elements **220** are each beneficially implemented as one or more of:
(a) one or more coiled helical springs implemented using one or more spirals of metal spring wire, for example steel wire and/or phosphor bronze wire;
(b) one or more coiled helical springs implemented using one or more spirals of molded plastics material, for example nylon and/or polypropylene;
(b) an expanded porous plastics material such as expanded polyurethane foam;
(c) a porous natural polymer material such as porous natural rubber;
(d) one or more inflated cavities bounded by flexible substantially gas-tight walls;

The flexible couple elements **230** are beneficially implemented to couple spring elements **220** into rows orientated substantially in a direction along the arrows **130** in Figure 2. The flexible coupling elements **230** are beneficially implemented as one or more of:
(a) one or more bands, strips or webs of elastic material, for example natural rubber and/or silicone rubber and/or polyurethane;
(b) a molded elastic chain of components fabricated using nylon, polyurethane, polypropylene, or similar elastic polymer plastics material;
(c) a chain of flexible spring metal hoops operable to exhibit longitudinal elastic behaviour; and
(d) an inflatable and deflatable air envelope operable when inflated to separate its respective neighbouring spring elements **220,** and operable when deflated to enable the neighbouring spring elements **220** to substantially mutually abut.

The bed-couch **105** also comprises an outer fabric layer **200** implemented in flexible material which is susceptible to stretch when the bed-couch **105** is progressively adjusted from its retracted non-deployed state **110** to its fully deployed state **120.** The fabric layer **200** is beneficially implemented as a very loosely woven coarse-thread fabric which is highly resistant to wear, for example loosely-woven nylon fabric, loosely-woven polyester fabric, loosely-woven cotton fabric, loosely-plaited leather fabric, polyurethane fabric, loosely-woven linen fabric.

In order to render the bed-couch **105** sufficiently comfortable when laid directly upon by the driver **70,** the outer fabric layer **200** is beneficially implemented to be several layers thick, for example to a total multi-layer thickness in a range of 3 mm to 15 mm, more optionally in a range of 5 mm to 10 mm thick. To further reduce individual spring elements **220** being felt when the driver **70** is resting on the bed-couch **105,** there is included a load-spreading feature denoted by **210.** The load-spreading feature **210** is beneficially extensible as the bed-couch **105** is progressively adjusted between its compact retracted state **110** and its fully deployed state **120.** When the outer fabric layer **200** is sufficiently thick to provide significant load spreading, the load-spreading feature **210** is optionally omitted.

Optionally, the load-spreading feature **210** is coupled only at its central longitudinal axis to a corresponding central longitudinal row of spring elements **220** and slidably retained down in position by the outer fabric cover **200** onto the array of spring elements **220;** the load-spreading feature **210** is then of a width corresponding to the bed-couch **105** when in its retracted state **110** such that edges of the array of spring elements **220** are then not covered by the load-spreading feature **210** when the bed-couch **105** is in its deployed extended state **120.** It would be abnormal for the driver **70** to apply his/her weight at the periphery of the bed-couch **105** when in its expanded deployed state **120.**

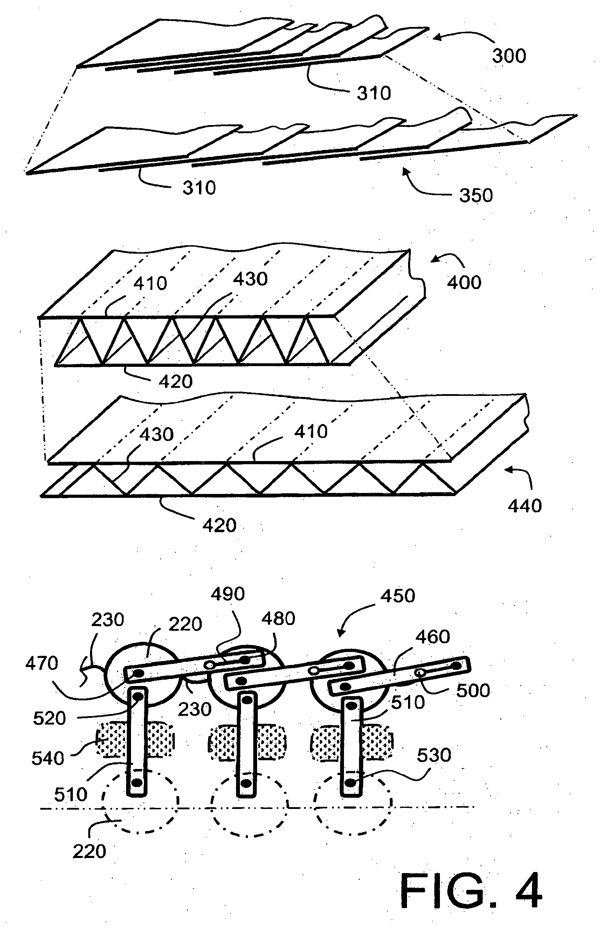

When adjustable in area, the load-spreading feature **210** is optionally, in a first arrangement, implemented as shown in cross-section in an upper portion of Figure 4 and indicated by **300** in a retracted non-deployed state, and by **350** in fully extended deployed state. As indicated by **300, 350,** the load-spreading feature **210** is implemented as a series of interleaved flexible sheets **310** which are operable to glide with respect to one another to accommodate adjustment of the bed-couch **105** between its contracted state **110** and its extended deployed state **120.** The interleaved flexible sheets **310** are interleaved to a greater extent when the bed-couch **105** is in its non-deployed retracted state **110** in comparison to being interleaved to a lesser extent when the bed-couch **105** is in its fully deployed expanded state **120.** The flexible sheets **310** are beneficially implemented from a polymer plastics material, for example polytetrafloroethylene (PTFE), PTFE-coated silicon rubber, nylon, polyethylene or similar. Moreover, the flexible sheets **310** are beneficially elongate in a direction substantially parallel with an elongate longitudinal axis z of the bed-couch **105** as shown in Figure 5. Furthermore, the flexible sheets **310** are beneficially coupled to their respective spring elements **220** so that their degree of interleaving is uniformly distributed amongst the sheets **310** as the bed-couch **105** is adjusted in stiffness in operation. Optionally, the sheets **310** are flexibly coupled together at their uppermost edges and/or at their lowermost edges, for example using extensible elastic strips, so that adjustment of the bed-couch **105** in a direction denoted by x in Figure 5 is equally distributed amongst the sheets **310** in use.

In a second arrangement of the load-spreading feature **210** as illustrated in a middle portion of Figure 4, there is included a zig-zag concertina-type component **430** whose folds are elongate in a direction substantially parallel to the longitudinal axis z of the bed-couch **105** as shown in Figure 5. The component **430** is shown in its retracted state as indicated by **400** and its extended deployed state by **440.** The component **430** is optionally bounded by load-spreading flexible sheets **410, 420,** for example implemented as a stretchly loosely-woven thread fabric, so that individual folds of the component **430** are not substantially felt by the driver **70** when sleeping or resting on the bed-couch **105.**

In a third arrangement of the load-spreading feature **210** as illustrated at a lower portion of Figure 4 and indicated generally by **450,** the spring elements **220** are coupled by transverse flexible support bars **460** and longitudinal support bars **510.** The support bars **460, 510** are preferable fabricated from one or more of a flexible polymer plastics material or thin spring steel strip. The transverse bars **460** are each pivotally mounted to their first neighbouring spring element **220** at a pivotal joint **470,** and to their second neighbouring element **220** at a slot pivotal joint **480** including a slot **490** for accommodating variations in separation between adjacent spring elements **220** in response to the bed-couch **105** being adjusted in stiffness in operation, for example to a pivot position denoted by **500** when the bed-couch **105** is in its fully retracted state **110.** The longitudinal support bars **510** are pivotally coupled to their respective spring elements **220** by pivotal joints **520, 530.** Moreover, the longitudinal bars **510** are beneficially provided with one or more load-spreading extensions **520** to provide the upper surface of the bed-couch **105** with a more spatial smooth stiffness characteristic. Optionally, one of more of the bars **460, 510** can be omitted to simplify construction and reduce assembly cost of the bed-couch **105.**

Other implementations of the load-spreading feature **210** are possible. As a further alternative, the load-spreading feature **210** is optionally included both above and below the array of spring elements **220.**

Referring to Figure 5, adjustment of stiffness of the bed-couch **105** is illustrated schematically. In its non-deployed retracted state **110,** the bed-couch **105** has a spatial separation of d₁ between neighbouring spring elements **220** in a traverse row of spring elements **220** along the Cartesian x axis and a spatial separation d₃ between neighbouring spring elements **220** in a longitudinal row of spring elements **220** along the Cartesian z axis. In its extended fully deployed state **120,** the bed-couch **105** has a spatial separation of d₂ between neighbouring spring elements **220** in a traverse row of spring elements **220** along the x axis and the spatial separation d₃ between neighbouring spring elements **220** in a longitudinal row of spring elements **220** along the z axis. The spatial separation d₃ is not limited to being equal to the spatial separations d₁ or d₂, and can assume a different value thereto. Optionally, the spatial separation d₃ is an average of the spatial separations d₁ or d₂, namely d₃ = (d₁ + d₂)/2.

Optionally, the coupling elements **230** are implemented as fluid-tight bellows or cavities having flexible side walls, for example implemented in rubber material in a manner generally akin to an inner-tube of a tyre (tire), which are in mutual fluid communication and which can be inflated or deflated as required to adjust the spatial separation d₁, d₂. The driver **70** is then able to adjust and deploy the bed-couch **105** by operating a fluid pump, for example an air pump; when the fluid pump includes an electric motor to provide pumping force, adjustment of the bed or couch **105** can be executed by manipulating electrical inflate/deflate switches included within the cab **20.**

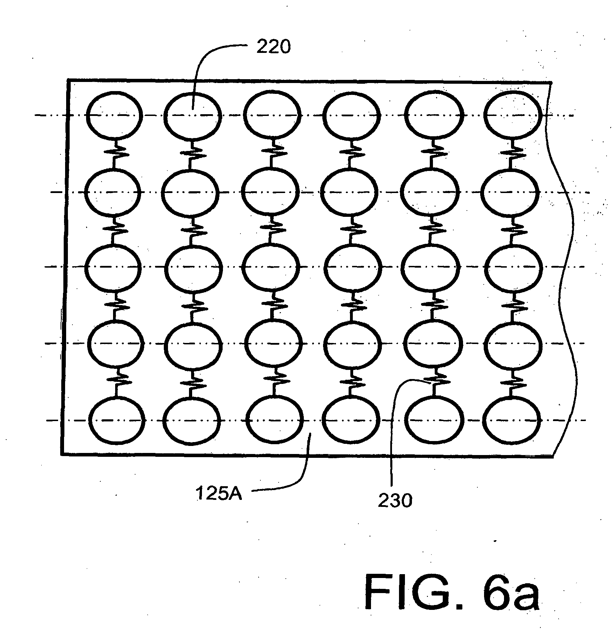

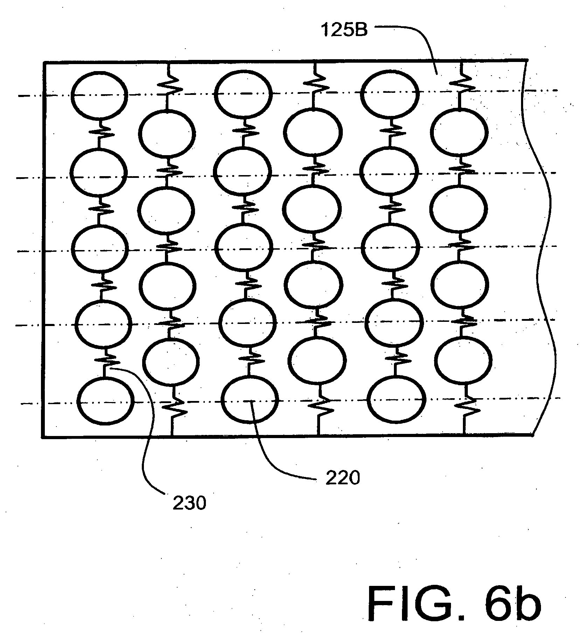

The aforesaid array of spring elements **220** are susceptible to being implemented in various spatial configurations. For example, in Figure 6a, the spring elements **220** are deployed in rows and columns as denotes by **125A** whose axes are substantially parallel or perpendicular at the Cartesian axes x, z in Figure 5. Alternatively, the spring elements **220** are disposed in a diagonal arrangement denoted by **126B** as shown in Figure 6B. The diagonal arrangement **126B** is of benefit in that the spring elements **220** can be mounted closer together for a given length of the coupling elements **230** for providing enhanced comfort.

In Figures 7 and 8, the bed-couch **105** is illustrated in its non-deployed retracted state **110** and in its fully extended deployed state **120.** As elucidated in the foregoing, the bed-couch **105** is continuously adjustable between the states **110, 120.** Moreover, the bed-couch **105** is useable by the driver **70** even when in its retracted non-deployed state **110** for resting or sleeping purposes and will then provide its greatest support stiffness as elucidated in the foregoing. The bed-couch 105 is slidably retained on the support surface **160** of a bench or seat **600** at the rear portion of the cab **20.**

The bed-couch **105** is beneficially provided with a mechanism or feature for holding the array of spring elements **220** in a given desired state of extension to prevent the spring elements **220** springing back to the non-deployed state **110.** Such a mechanism can include, for example, one or more of:
(a) tabs **610** or similar fasteners on the bed-couch **105** which are attachable in operation at various positions along pivotal extensions **620** of the bench **600** in a vicinity at extreme corners of the bed-couch **105;** the pivotal extensions **620** are operable to be optionally folded down when the bed-couch **105** is in its retracted non-deployed state 110 as shown in Figure 7, and folded up as shown in Figure 8 for supporting extension of the bed-couch **105** when the bed-couch **105** is to be comfort-adjusted;
(b) a mechanical screw, chain or worm drive which are drive **70** adjustable to apply an extension force to the array of spring elements **220** for maintaining therebetween a desired spatial separation d₁, d₂; and
(c) selective inflation or deflation of inflatable elements defining the spatial separation d₁, d₂.
Alternative implementations of the mechanism are also possible.

The bed-couch **105** is of benefit, unlike known bed-couches, in that its support spring stiffness per unit area thereof is continuously adjustable across its entire body-supporting area in a highly controllable manner; such a characteristic is to be contrasted with known inflatable air beds which either provide a hard fully inflated state or a flaccid partially-deflated state, namely a non-continuously variable adjustment. Although adjustment of the bed-couch **105** along the x axis as shown in Figure 5 is described in the foregoing, it will appreciated that the bed-couch **105** can also be modified to be adjustable also in a direction generally along the z axis. Yet alternatively, the bed-couch **105** can be implemented so that its support stiffness is adjusted by modifying its length along the z axis so that the bed-couch **105** exhibits constant width whilst its stiffness is being adjusted.

The present invention also concerns methods of adjusting a support stiffness of the bed-couch **105,** in its various implementations as described in the foregoing, by adjusting a spatial separation between spring elements **220** included in an array of spring elements **220.**

Although deployment of the bed-couch **105** in heavy commercial vehicles is described in the foregoing, it will be appreciated that it can be employed in other applications, for example in one or more of:
(a) aquatic vessels such as yachts, ferries, cruise ships, cargo ships, submarines;
(b) in air-borne vehicles such as aircraft, space stations;
(c) in road vehicles and trailers such a caravans, coaches, buses, automobiles;
(d) in hospitals for improving patient comfort where a wide range of patient weights and preferences need to be accommodated;
(e) in domestic premises, for example in bedrooms;
(f) in massage parlours for massage beds; and
(e) in infant cots in nurseries.

Expressions such as "has", "is", "include", "comprise", "consist of", "incorporates" are to be construed to include additional components or items which are not specifically defined; namely, such terms are to be construed in a non-exclusive manner. Moreover, reference to the singular is also to be construed to also include the plural. Furthermore, numerals and other symbols included within parentheses in the accompanying claims are not to be construed to influence interpreted claim scope but merely assist in understanding the present invention when studying the claims.

## Claims

1. A bed-couch (105) including an upper supporting surface for receiving a person, said bed-couch (105) being operable to provide a flexible support characteristic at said upper surface for supporting said person, said bed-couch (105) comprises an array of spatially distributed cylindrical spring elements (220) for providing said flexible support characteristic, said array of distributed spring elements (220) having mutual spatial separations which are adjustable for affecting in operation a continuously-variable adjustment of said flexible support characteristic, wherein
said bed-couch (105) is variable in at least one of its width and length for affecting adjustment of said mutual separations between the spring elements (220),
wherein said array of spring elements (220) are coupled together in rows using a coupling arrangement (230), said coupling arrangement (230) being operable to spatially distribute the spring elements (220) along their respective rows in response to adjusting one or more the width and length of the bed-couch (105); and wherein said bed-couch further comprises a load-spreading arrangement (200, 210) interposed between at least a portion of said array of spring elements (220) and said supporting upper surface, said load-spreading arrangement (200, 210) being operable to locally distribute load forces applied thereto so that said spring elements (200) are not substantially individually discernable by said person (70) when resting or sleeping on said upper support surface, **characterized in that** the spring elements (220) are in upright position.

2. A bed-couch (105) as claimed in claim 1, wherein said bed-couch (105) further includes a fastening arrangement (610, 620) for maintaining said bed-couch (105) in a defined state of extension so as to maintain said defined corresponding flexible support characteristic when said bed-couch (105) is in use with said person (70) resting or sleeping thereupon.

3. A bed-couch (105) as claimed in claim 1, wherein said load-spreading arrangement (210) is adjustable in area in response to the bed-couch being adjusted in at least one of its width and its length.

4. A bed-couch (105) as claimed in claim 3, wherein said load-spreading arrangement (210) includes interleaved and/or foldable component parts for providing for said adjustment of area of said load-spreading arrangement (210).

5. A bed-couch (105) as claimed in any one of the preceding claims, wherein said spring elements (200) are arranged in rows and columns which are substantially parallel or orthogonal to transverse and longitudinal axes (x, z) of said bed-couch (105).

6. A bed-couch (105) as claimed in any one of claims 1 to 4, wherein said spring elements (220) are arranged in rows and columns which are substantially diagonal to transverse and longitudinal axes (x, z) of said bed-couch (105).

7. A bed-couch (105) as claimed in any one of the preceding claims, wherein the spring elements (220) are implemented as one or more of:
(a) one or more coiled helical springs implemented using a spiral of metal spring wire;
(b) one or more coiled helical springs implemented using one or more spirals of molded plastics material;
(b) an expanded porous elastic plastics material foam;
(c) a porous natural polymer elastic material;
(d) one or more inflated cavities bounded by flexible substantially gas-tight walls; and

8. A bed-couch (105) as claimed in claim 1, wherein the coupling arrangement (230) is implemented as one or more of:
(a) one or more bands, strips or webs of elastic material;
(b) a molded elastic chain of components fabricated from polymer plastics material;
(c) a chain of flexible spring metal hoops operable to exhibit longitudinal elastic behaviour; and
(d) an inflatable and deflatable air envelope operable when inflated to separate its respective neighbouring spring elements (220), and operable when deflated to enable the neighbouring spring elements (200) to substantially mutually abut.

9. A bed-couch (105) as claimed in any one of the preceding claims, said bed-couch (105) being adapted for use in one or more applications as follows:
(a) for cabs (20) of heavy commercial vehicles (10);
(b) for aquatic vessels including one or more of: yachts, ferries, cruise ships, cargo ships, submarines;
(c) in air-borne vehicles includes one of more of: aircraft, space stations;
(d) in road vehicles and trailers including one or more of: a caravans, coaches, buses, automobiles;
(e) in hospitals for improving patient comfort where a wide range of patient weights and preferences need to be accommodated;
(f) in domestic premises;
(g) in massage parlours for massage beds; and
(h) in infant cots in nurseries.

10. A vehicle (10) comprising one of more bed-couches (105) as claimed in claim 1.

11. A method of adjusting a stiffness of support provided in operation by a bed-couch (105) as claimed in any one of the preceding claims, said bed-couch (105) being operable to provide a flexible support characteristic at said upper surface for supporting said person,
**characterized in that**
said method includes steps of:
(a) providing in said bed-couch (105) an array of spatially distributed spring elements (220) for providing said flexible support characteristic; and
(b) adjusting mutual spatial separations between neighbouring spring elements (220) of said array of distributed spring elements (220) for affecting in operation a continuously-variable adjustment of said flexible support characteristic.

## Patentansprüche

1. Bettcouch (105) umfassend eine obere Tragefläche zur Aufnahme einer Person, wobei die Bettcouch (105) für die Bereitstellung eines flexiblen Tragemerkmals an der oberen Fläche zum Tragen der Person betätigbar ist, wobei die Bettcouch (105) eine Anordnung von räumlich verteilten zylindrischen Federelementen (220) zur Bereitstellung des flexiblen Tragemerkmals umfasst, wobei die Anordnung von verteilten Federelementen (220) gegenseitige räumliche Trennungen aufweist, die einstellbar sind, um im Betrieb eine stufenlos veränderbare Einstellung des flexiblen Tragemerkmals zu beeinflussen, wobei
die Bettcouch (105) bezüglich wenigstens einer ihrer Breite und Länge variabel ist, um die Einstellung der gegenseitigen Trennungen zwischen den Federelementen (220) zu beeinflussen,
wobei die Anordnung von Federelementen (220) unter Verwendung einer Verbindungseinrichtung (230) miteinander in Reihen verbunden ist, wobei die Verbindungseinrichtung (230) für die räumliche Verteilung der Federelemente (220) entlang ihrer jeweiligen Reihen ansprechend auf das Einstellen einer oder mehrerer der Breite und Länge der Bettcouch (105) betätigbar ist; und
wobei die Bettcouch ferner eine Lastverteilungseinrichtung (200, 210) umfasst, die zwischen wenigstens einem Abschnitt der Anordnung von Federelementen (220) und der tragenden oberen Fläche positioniert ist, wobei die Lastverteilungseinrichtung (200, 210) für die örtliche Verteilung der auf sie aufgebrachten Lastkräfte so betätigbar ist, dass die Federelemente (220) von der Person (70) nicht wesentlich einzeln wahrnehmbar sind, wenn sie auf der oberen Tragefläche ruht oder schläft,
**dadurch gekennzeichnet, dass** sich die Federelemente (220) in einer aufrechten Position befinden.

2. Bettcouch (105) nach Anspruch 1, wobei die Bettcouch (105) ferner eine Befestigungseinrichtung (610, 620) zum Aufrechterhalten der Bettcouch (105) in einem definierten Erstreckungszustand umfasst, um das definierte entsprechende flexible Tragemerkmal aufrechtzuerhalten, wenn die Bettcouch (105) mit der Person (70), die darauf ruht oder schläft, verwendet wird.

3. Bettcouch (105) nach Anspruch 1, wobei die Lastverteilungseinrichtung (210) ansprechend darauf, dass die Bettcouch wenigstens bezüglich einer ihrer Breite und ihrer Länge eingestellt wird, bezüglich der Fläche einstellbar ist.

4. Bettcouch (105) nach Anspruch 3, wobei die Lastverteilungseinrichtung (210) überlappende und/oder klappbare Bauteile zur Bereitstellung der Flächeneinstellung der Lastverteilungseinrichtung (210) umfasst.

5. Bettcouch (105) nach irgendeinem der vorhergehenden Ansprüche, wobei die Federelemente (220) in Reihen und Spalten angeordnet sind, die im Wesentlichen parallel oder rechtwinklig zu Quer- und Längsachsen (x, z) der Bettcouch (105) sind.

6. Bettcouch (105) nach irgendeinem der Ansprüche 1 bis 4, wobei die Federelemente (220) in Reihen und Spalten angeordnet sind, die im Wesentlichen diagnonal zu Quer- und Längsachsen (x, z) der Bettcouch (105) sind.

7. Bettcouch (105) nach irgendeinem der vorhergehenden Ansprüche, wobei die Federelemente (220) implementiert sind als eine oder mehrere aus:
(a) eine oder mehrere gewickelte Schraubenfedern, die unter Verwendung einer Spirale aus Metallfederdraht implementiert sind;
(b) eine oder mehrere gewickelte Schraubenfedern, die unter Verwendung einer oder mehrerer Spiralen aus geformtem Kunststoffmaterial implementiert sind;
(c) ein expandierter poröser elastischer Kunststoffmaterialschaum;
(d) ein poröses elastisches Naturpolymermaterial;
(e) ein oder mehrere aufgeblasene Hohlräume, die von flexiblen, im Wesentlichen gasundurchlässigen Wänden begrenzt sind.

8. Bettcouch (105) nach Anspruch 1, wobei die Verbindungseinrichtung (230) implementiert ist als eines oder mehrere aus:
(a) ein oder mehrere Bänder, Streifen oder Bahnen aus elastischem Material;
(b) eine geformte elastische Kette aus Komponenten, die aus Polymerkunststoffmaterial hergestellt sind;
(c) eine Kette aus flexiblen Federmetallreifen, die so betätigbar sind, dass sie elastisches Verhalten in Längsrichtung zeigen; und
(d) eine aufblasbare und entleerbare Lufthülle, die so betätigbar ist, dass sie im aufgeblasenen Zustand ihre jeweiligen benachbarten Federelemente (220) trennt und im entleerten Zustand ermöglicht, dass die benachbarten Federelemente (220) im Wesentlichen aneinander anliegen.

9. Bettcouch (105) nach irgendeinem der vorhergehenden Ansprüche, wobei die Bettcouch (105) für die Verwendung bei einer oder mehreren Anwendungen wie folgt angepasst ist:
(a) für Kabinen (20) von schweren Nutzfahrzeugen (10);
(b) für Wasserfahrzeuge einschließlich einem oder mehreren aus: Yachten, Fähren, Kreuzfahrtschiffen, Frachtschiffen, Unterseebooten;
(c) in Luftfahrzeugen einschließlich einem oder mehreren aus: Flugzeug, Raumstationen;
(d) in Straßenfahrzeugen und Anhängern einschließlich einem oder mehreren aus: Wohnwagen, Reisezugwagen, Bussen, Automobilen;
(e) in Krankenhäusern zur Verbesserung der Patientenbequemlichkeit, wo einem breiten Spektrum von Patientengewichten und -präferenzen Rechnung getragen werden muss;
(f) in Wohnhäusern;
(g) in Massageräumen für Massageliegen; und
(h) in Kinderbetten in Kindertagesstätten.

10. Fahrzeug (10), das eine oder mehrere Bettcouchen (105) nach Anspruch 1 umfasst.

11. Verfahren zur Einstellung einer Tragesteifigkeit, die im Betrieb von einer Bettcouch (105) nach irgendeinem der vorhergehenden Ansprüche bereitgestellt wird, wobei die Bettcouch (105) für die Bereitstellung eines flexiblen Tragemerkmals an der oberen Fläche zum Tragen der Person betätigbar ist,
**dadurch gekennzeichnet, dass**
das Verfahren folgende Schritte umfasst:
(a) Bereitstellen in der Bettcouch (105) einer Anordnung von räumlich verteilten Federelementen (220) zur Bereitstellung des flexiblen Tragemerkmals; und
(b) Einstellen gegenseitiger räumlicher Trennungen zwischen benachbarten Federelementen (220) der Anordnung von verteilten Federelementen (220) zur Beeinflussung einer stufenlos veränderbaren Einstellung des flexiblen Tragemerkmals im Betrieb.

## Revendications

1. Lit-couchette (105) comportant une surface de support supérieure pour recevoir une personne, ledit lit-couchette (105) pouvant fonctionner pour fournir une caractéristique de support flexible au niveau de ladite surface supérieure pour supporter ladite personne, ledit lit-couchette (105) comprend un réseau d'éléments ressorts cylindriques distribués spatialement (220) pour fournir ladite caractéristique de support flexible, ledit réseau d'éléments ressorts distribués (220) ayant des séparations spatiales mutuelles qui peuvent être réglées pour agir, en fonctionnement, sur un réglage à variation continue de ladite caractéristique de support flexible, où
la largeur et/ou la longueur dudit lit-couchette (105) est/sont variable(s) pour agir sur le réglage desdites séparations mutuelles entre les éléments ressorts (220),
dans lequel ledit réseau d'éléments ressorts (220) sont couplés ensemble en rangées en utilisant un agencement de couplage (230), ledit agencement de couplage (230) pouvant fonctionner pour distribuer spatialement les éléments ressorts (220) le long de leurs rangées respectives en réponse au réglage d'une ou de plusieurs de la largeur et de la longueur du lit-couchette (105) ; et où ledit lit-couchette comprend en outre un agencement de répartition de charge (200, 210) interposé entre au moins une partie dudit réseau d'éléments ressorts (220) et ladite surface supérieure de support, ledit agencement de répartition de charge (200, 210) pouvant fonctionner pour distribuer localement des forces de charge qui lui sont appliquées de sorte que lesdits éléments ressorts (200) ne soient pas sensiblement discernables individuellement par ladite personne (70) lors du repos ou du couchage sur ladite surface de support supérieure, **caractérisé en ce que** les éléments ressorts (220) sont en position verticale.

2. Lit-couchette (105) tel que revendiqué dans la revendication 1, dans lequel ledit lit-couchette (105) comporte en outre un agencement de fixation (610, 620) pour maintenir ledit lit-couchette (105) dans un état d'extension défini de manière à maintenir ladite caractéristique de support flexible correspondante définie lorsque ledit lit-couchette (105) est en cours d'utilisation, avec ladite personne (70) en repos ou couchée sur celui-ci.

3. Lit-couchette (105) tel que revendiqué dans la revendication 1, dans lequel la superficie dudit agencement de répartition de charge (210) peut être réglée en réponse au réglage de la largeur et/ou de la longueur du lit-couchette.

4. Lit-couchette (105) tel que revendiqué dans la revendication 3, dans lequel ledit agencement de répartition de charge (210) comporte des parties constitutives entrelacées et/ou pliables pour prévoir ledit réglage de superficie dudit agencement de répartition de charge (210).

5. Lit-couchette (105) tel que revendiqué dans l'une quelconque des revendications précédentes, dans lequel lesdits éléments ressorts (200) sont agencés en rangées et colonnes qui sont sensiblement parallèles ou perpendiculaires aux axes transversal et longitudinal (x, z) dudit lit-couchette (105).

6. Lit-couchette (105) tel que revendiqué dans l'une quelconque des revendications 1 à 4, dans lequel lesdits éléments ressorts (220) sont agencés en rangées et colonnes qui sont sensiblement en diagonale par rapport aux axes transversal et longitudinal (x, z) dudit lit-couchette (105).

7. Lit-couchette (105) tel que revendiqué dans l'une quelconque des revendications précédentes, dans lequel les éléments ressorts (220) sont mis en oeuvre sous forme d'un(e) ou de plusieurs parmi :
(a) un ou plusieurs ressort(s) hélicoïdal/hélicoïdaux mis en oeuvre en utilisant une spirale de fil à ressort métallique ;
(b) un ou plusieurs ressort(s) hélicoïdal/hélicoïdaux mis en oeuvre en utilisant une ou plusieurs spirale(s) en matière plastique moulée ;
(b) une mousse en matière plastique élastique poreuse expansée ;
(c) une matière élastique de polymère naturel poreux ;
(d) une ou plusieurs cavité(s) gonflée(s) délimitée(s) par des parois flexibles sensiblement étanches aux gaz.

8. Lit-couchette (105) tel que revendiqué dans la revendication 1, dans lequel l'agencement de couplage (230) est mis en oeuvre sous la forme d'un(e) ou de plusieurs parmi :
(a) un(e) ou plusieurs bande(s), ruban(s) ou sangle(s) de matière élastique ;
(b) une chaîne élastique moulée de composants fabriqués à partir d'une matière plastique polymère ;
(c) une chaîne de cercles métalliques de ressort flexible pouvant fonctionner pour présenter un comportement élastique longitudinal ; et
(d) une enveloppe d'air gonflable et dégonflable pouvant fonctionner lorsqu'elle est gonflée pour séparer ses éléments ressorts voisins respectifs (220), et pouvant fonctionner lorsqu'elle est dégonflée pour permettre aux éléments ressorts voisins (200) de venir en butée sensiblement mutuellement.

9. Lit-couchette (105) tel que revendiqué dans l'une quelconque des revendications précédentes, ledit lit-couchette (105) étant adapté pour une utilisation dans une ou plusieurs application(s) comme suit :
(a) pour des cabines (20) de véhicules utilitaires poids lourds (10) ;
(b) pour des navires aquatiques comportant un ou plusieurs parmi : des yachts, des traversiers, des navires de croisière, des navires de charge, des sous-marins ;
(c) dans des véhicules aériens comportant un(e) ou plusieurs parmi : des aéronefs, des stations spatiales ;
(d) dans des véhicules routiers et des remorques comportant un(e) ou plusieurs parmi : des caravanes, des autocars, des autobus, des automobiles ;
(e) dans des hôpitaux pour améliorer le confort du patient où une large gamme de poids et de préférences des patients ont besoin d'être pris en compte :
(f) dans des locaux domestiques ;
(g) dans des salons de massage pour des lits de massage ; et
(h) dans des berceaux de bébé dans des crèches.

10. Véhicule (10) comprenant un ou plusieurs lit(s)-couchette(s) (105) tel que revendiqué dans la revendication 1.

11. Procédé de réglage d'une rigidité de support fourni, en fonctionnement, par un lit-couchette (105) tel que revendiqué dans l'une quelconque des revendications précédentes, ledit lit-couchette (105) pouvant fonctionner pour fournir une caractéristique de support flexible au niveau de ladite surface supérieure pour supporter ladite personne,
**caractérisé en ce que**
ledit procédé comporte les étapes consistant :
(a) à fournir dans ledit lit-couchette (105) un réseau d'éléments ressorts distribués spatialement (220) pour fournir ladite caractéristique de support flexible ; et
(b) à régler des séparations spatiales mutuelles entre des éléments ressorts voisins (220) dudit réseau d'éléments ressorts distribués (220) pour agir, en fonctionnement, sur un réglage à variation continue de ladite caractéristique de support flexible.
